# EUROPEAN PATENT SPECIFICATION

(11) **EP 4 279 229 B1**
(45) Date of publication and mention of the grant of the patent: **26.02.2025**
(21) Application number: 23174111.7
(22) Date of filing: 17.05.2023
(51) Int. Cl.: B25J 15/04

(54) **ROBOTIC ARM END AXLE MECHANICAL AUTOMATIC TOOL CHANGING MECHANISM**
MECHANISCHER AUTOMATISCHER WERKZEUGWECHSLER FÜR ROBOTERARMENDACHSE
MÉCANISME DE CHANGEMENT D'OUTIL AUTOMATIQUE MÉCANIQUE D'AXE D'EXTRÉMITÉ DE BRAS ROBOTIQUE

(30) Priority: 18.05.2022 TW 111118533
(43) Date of publication of application: 22.11.2023
(73) Proprietor: Chieftek Precision Co., Ltd., Tainan City 744 (TW)
(72) Inventor: HSU, Ming-Che, Tainan City (TW); WU, Syuan-Jyun, 744 Tainan City (TW)
(74) Representative: Lang, Christian

(56) References cited:
- WO-A1-2020/249465
- JP-A- H0 531 690
- JP-A- H05 154 785
- JP-A- S53 107 061
- US-A1- 2020 009 717

## Description

### BACKGROUND OF THE INVENTION

### (a) Field of the Invention

The present invention relates to a robotic arm end axle mechanical automatic tool changing mechanism, and more particularly to an automatic tool changing mechanism whereby during the process of tool changing, a first connecting plate 1 and a second connecting plate 3 are combined with each other by means of a magnetic binding force between first magnetizing units 14 and second magnetizing units 34, ensuring a first connecting unit of the first connecting plate 1 and a second connecting unit of the second connecting plate 3 are able to accurately complete a mechanical connection during the tool changing process to enable fixing the first connecting plate 1 and the second connecting plate 3 to each other.

### (b) Description of the Prior Art

Current automated machine tools all adopt an automatic tool changing mechanism when replacing a machine tool because of tool wear or to machine different regions of a workpiece.

In U.S. Patent No. US11130243B2, which discloses a "Tool coupler, tool changer, tool mounter, and tool change system having the same", and PCT (Patent Cooperation Treaty) International Publication No. WO2020249465A1, which discloses a "Tool changer for collaborative robots, a robot tool changer system and a method for connecting a tool to a robot arm", the direction a robotic arm enters a tool changer to connect to a tool connecting plate is perpendicular to the direction of driving the tool connecting plate to separate from the tool changer, which enables tool changing in a relatively small space.

In the above mentioned U.S. Patent No. US11130243B2, a tool changer 50 on a robotic arm uses a coupler 20 magnetically connected to a structure 4 to carry out tool changing. Specifically, the tool changer 50 on the robotic arm is provided with a magnetic module 70, wherein the magnetic module 70 protrudes into recesses 39 in the coupler 20 on the structure 4 provided with a tool 3 using magnetic terminals 72, and attaches to magnet modules 40, thereby binding the tool changer 50 and the coupler 20 and completing the tool changing process. However, the magnetic attachment function has no clamping structure, thus, there is the possibility of the coupler 20 dropping off due to collision during an operating process.

In the above mentioned PCT International Publication No. WO2020249465A1, the locking mechanisms of a first locking means 28 and a second locking means 30 are used to lock a first tool changer part 12 and a second tool changer part 14 to each other and complete a tool changing process. However, during the process of a robotic arm driving the first tool changer part 12 and the second tool changer part 14 to separate from a device holder 44, before the first locking means 28 and the second locking means 30 have completed locking the first tool changer part 12 and the second tool changer part 14 to each other, factors such as vibration or unstable clamping may result in misalignment of the second tool changer part 14 with the first tool changer part 12, thereby preventing the first locking means 28 and the second locking means 30 from accurately locking the first tool changer part 12 and the second tool changer part 14 to each other. The general solution used in the above Patent No. WO2020249465A1 is to use the first tool changer part 12 and the second tool changer part 14 of the robotic arm to continuously apply a force in a direction different from the direction of the acting forces of the first locking means 28 and the second locking means 30, enabling the first tool changer part 12 and the second tool changer part 14 to maintain accurate combining alignment during the tool changing process.

The documents US2020/009717A1, JPS53107061A, JPH0531690A and JPH05154785A are also part of the prior art.

### SUMMARY OF THE INVENTION

The objective of the invention is achieved by the subject-matter of the independent claim. Advantageous embodiments are disclosed by the dependent claims.

The present invention provides a robotic arm end axle mechanical automatic tool changing mechanism, including a first connecting plate, a plurality of second connecting plates, and a plurality of tool changers, wherein the first connecting plate is fixed to a robotic arm end axle and moves along with the robotic arm end axle. The first connecting plate includes a first guide unit, a first connecting unit, and a first magnetizing unit. The second connecting plates enable a plurality of tools to be fixed thereto respectively, wherein each of the second connecting plates includes a second guide unit, a second connecting unit, and a second magnetizing unit. Each of the second connecting plates is configured to be mounted on a respective one of the tool changer, and can be selected to separate from the tool changer.

When the second connecting plates are mounted on the tool changers, the robotic arm end axle drives the first connecting plate close to a selected one of the second connecting plates and draws the first connecting plate and the second connecting plate to separate from the tool changer. Specifically, when the first connecting plate is relatively close to the selected second connecting plate at a preset distance, the first guide unit of the first connecting plate and the second guide unit of the selected second connecting plate jointly guide the first connecting plate and the selected second connecting plate to accurately align with each other. The magnetic force between the first magnetizing unit and the second magnetizing unit within the preset distance provides a magnetic binding force that mutually draws and combines the first connecting plate and the selected second connecting plate to each other. Under the effect of the magnetic binding force, the first connecting plate and the selected second connecting plate are fixed to each other by the mechanical connection between the first connecting unit and the second connecting unit of the selected second connecting plate.

Furthermore, the first magnetizing unit and the second magnetizing unit are magnets, or one of them is a magnet and the other is a magnetizing member.

Further, the first guide unit is a protruding portion, the protruding portion extends in a third direction and is provided with a first guide hole. The first connecting unit includes a first lifting pin inside the first guide hole, and the first lifting pin is applied with a first acting force. The second guide unit is an indentation corresponding to the protruding portion. The second connecting unit of each second connecting plate includes a second lifting pin disposed on the second connecting plate in a movable manner along the third direction, and a guide lock disposed on the second connecting plate in a movable manner along the first direction and configured to connectively drive the second lifting pin to protrude out or withdraw into the indentation. The robotic arm end axle is configured to drive the first connecting plate to approach the selected second connecting plates along a second direction, and uses the protruding portion to match up with the indentation to align and join the first connecting plate with the selected second connecting plate, a magnetic binding force produced between the first magnetizing unit and the second magnetizing unit along the second direction is then used to combine the first connecting plate and the selected second connecting plate to each other, and then the robotic arm end axle draws the first connecting plate and the selected second connecting plate to move away from the corresponding tool changer along the first direction, with an included angle between the first direction and the second direction, the guide lock applies a second acting force to overcome the first acting force and drive the second lifting pin to push and move the first lifting pin, thereby causing the second lifting pin to extend into the first guide hole and form the aforementioned mechanical connection, thus fixing the first connecting plate and the selected second connecting plate to each other.

Further, each of the tool changers includes a third force applying member and at least one protruding post. When the robotic arm end axle drives the first connecting plate and the selected second connecting plate to move towards the corresponding tool changer along the first direction, the protruding post pushes against the guide lock to overcome the second acting force, whereupon the first lifting pin pushes and moves the second lifting pin by the first acting force, causing the second lifting pin to withdraw into the indentation and release the mechanical connection, and the third force applying member applies a third acting force on the selected second connecting plate, causing the selected second connecting plate to mount on the corresponding tool changer, and then the first connecting plate moves away from the selected second connecting plate along the second direction.

Further, any one of the first acting force, the second acting force, and the third acting force is elastic force or magnetic force.

Further, the second connecting plate includes at least one guide locking groove to receive the guide locks and a second force applying member, wherein the guide lock is provided with a recessed portion and a guide inclined surface, and the second lifting pin is provided with a second lifting pin inclined surface corresponding to the guide inclined surface. When the selected second connecting plate moves away from the corresponding tool changer, the second force applying member applies the second acting force to drive the guide lock, and the coordinating function of the guide inclined surface and the second lifting pin inclined surface causes the second lifting pin to protrude out the indentation, thereby overcoming the first acting force and extending into the first guide hole. When the selected second connecting plate moves toward the corresponding tool changer, the protruding post penetrates the guide locking grooves, whereupon the protruding post pushes and moves the guide lock to overcome the second acting forces, and the first lifting pin pushes and moves the second lifting pins by the first acting force toward the recessed portion, thereby causing the second lifting pins to separate from the first guide hole and withdraw into the indentation. Moreover, a first force applying member is disposed inside the first guide hole, wherein the first force applying member applies the first acting force on the first lifting pin.

Further, the first connecting plate includes a first contact surface, the top of which is provided with a first slot; the first magnetizing unit is embedded in the first slot and flush with the first contact surface. Each of the second connecting plate includes a second contact surface, wherein the top of which is provided with a second slot, and the second magnetizing unit is embedded in the second slot and flush with the second contact surface.

Further, the direction of the magnetic binding force is different from the direction of the mechanical connection.

Based on the above-described technological characteristics, the present invention is preferably able to achieve the following effects:
1. During the tool changing process, the magnetic binding force between the first magnetizing units and the second magnetizing units enables combining the first connecting plate with the second connecting plate, and enables a stable separation process of the selected second connecting plate from the corresponding tool changer without shaking or vibrating, ensuring that the first connecting unit of the first connecting plate and the second connecting unit of the selected second connecting plate can accurately complete a mechanical connection therebetween, thereby fixing the first connecting plate and the second connecting plate to each other. Moreover, the magnetic binding force ensures the first connecting plate can align and combine with the selected second connecting plate without continuously applying a force.
2. According to requirements, the magnetic configuration of the first magnetizing unit and the second magnetizing unit can be set up according to the weight of the second connecting plate and the tool being used.
3. The first magnetizing unit and the second magnetizing unit can be magnets, or one of them can be a magnet and the other a magnetizing member.

To enable a further understanding of said objectives, structures, characteristics, and effects, as well as the technology and methods used in the present invention and effects achieved, a brief description of the drawings is provided below followed by a detailed description of the preferred embodiments.

### BRIEF DESCRIPTION OF THE DRAWINGS

FIG. 1 is a side view of a robotic arm end axle according to an embodiment of the present invention.
FIG. 2 is a perspective view showing the robotic arm end axle driving a first connecting plate to align with a second connecting plate on a tool changer according to the embodiment of the present invention.
FIG. 3 is a side view showing the robotic arm end axle driving the first connecting plate and the second connecting plate connected to the tool changer according to the embodiment of the present invention.
FIG. 4 is a perspective view of the first connecting plate according to the embodiment of the present invention.
FIG. 5 is a schematic view of a first contact surface of the first connecting plate according to the embodiment of the present invention.
FIG. 6 is a cross-sectional view taken along the line VI-VI in FIG. 5.
FIG. 7 is a perspective view of the second connecting plate according to the embodiment of the present invention.
FIG. 8 is a schematic view of a second contact surface of the second connecting plate according to the embodiment of the present invention.
FIG. 9 is a cross-sectional view taken along the line IX-IX in FIG. 8.
FIG. 10 is a perspective view showing that the second connecting plate is mounted on the tool changer and the first connecting plate is correspondingly combined to the second connecting plate according to the embodiment of the present invention.
FIG. 11 is a side view showing that the second connecting plate is mounted on the tool changer and the first connecting plate is correspondingly combined to the second connecting plate according the embodiment of the present invention.
FIG. 12 is a cross-sectional view taken along the line XII-XII in FIG. 11.
FIG. 13 is a schematic view showing the second connecting plate mounted on the tool changer with the first connecting plate and the second connecting plate combined together through a magnetic binding force between first magnetizing units and second magnetizing units according to the embodiment of the present invention.
FIG. 14 is a perspective view of the operation process of the first connecting plate and the second connecting plate being disengaged from the tool changer by the robotic arm end axle according to the embodiment of the present invention.
FIG. 15 is a side view of the operation process of the first connecting plate and the second connecting plate disengaging from the tool changer by the robotic arm end axle according to the embodiment of the present invention.
FIG. 16 is a cross-sectional view taken along the line XVI-XVI in FIG. 15.
FIG. 17 is a perspective view of the first connecting plate and the second connecting plate completely disengaged from the tool changer by the robotic arm end axle according to the embodiment of the present invention.
FIG. 18 is a side view showing the first connecting plate and the second connecting plate completely disengaged from the tool changer by the robotic arm end axle according to the embodiment of the present invention.
FIG. 19 is a cross-sectional view taken along the line XIX-XIX in FIG. 18.
FIG. 20 is a cross-sectional view of the embodiment of the present invention, showing that during the process of the robotic arm end axle driving the first connecting plate and the second connecting plate to disengage from the tool changer, the whole process is achieved through the magnetic binding force between the first magnetizing units and the second magnetizing units, which enables maintaining accurate alignment of the first connecting plate and the second connecting plate.

### DETAILED DESCRIPTION OF THE PREFERRED EMBODIMENTS

The following description of an embodiment of the present invention is to assist in describing a robotic arm end axle mechanical automatic tool changing mechanism of the present invention, and is not intended to limit the present invention.

To facilitate understanding, in the description of the following embodiment "combined" is used to describe a connected relationship resulting from a "magnetic force", and "fixed" is used to describe a fixed relationship resulting from a "mechanical connection".

Magnetic binding force: refers to a binding force produced by magnetic attraction.

Combined: refers to a connected relationship between two objects produced by a magnetic binding force. "Combined" enables two objects to remain connected by a magnetic force, and the two objects are not easily separated.

Mechanical connection: refers to a selective connection between two objects by physical components, and limitations on the degrees of freedom on the two objects fixes the two objects together.

Fixed: refers to a stable connected relationship between two objects through a mechanical connection. The mechanical connection can be selectively executed and selectively released, and until the mechanical connection is released, "fixed" prevents the two objects from separating from each other.

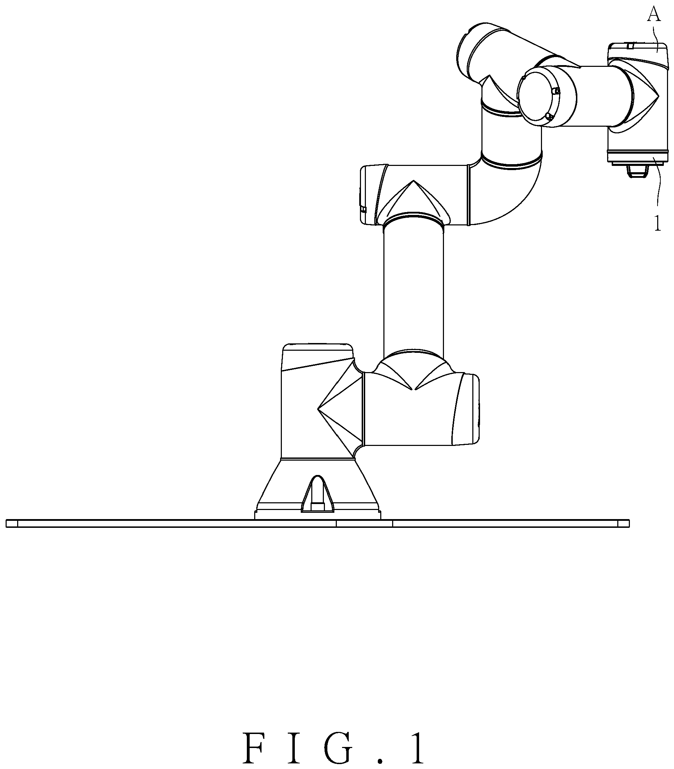

Referring to FIG. 1, which shows an embodiment of an automatic tool changing mechanism of the present invention executed by a robotic arm end axle A. Specifically, the robotic arm end axle A is combined and fixed to a first connecting plate 1 or the first connecting plate 1 extends from the robotic arm end axle A, e.g., the first connecting plate 1 can be formed on the robotic arm end axle A. The first connecting plate 1 of the present embodiment is fixedly locked to the robotic arm end axle A.

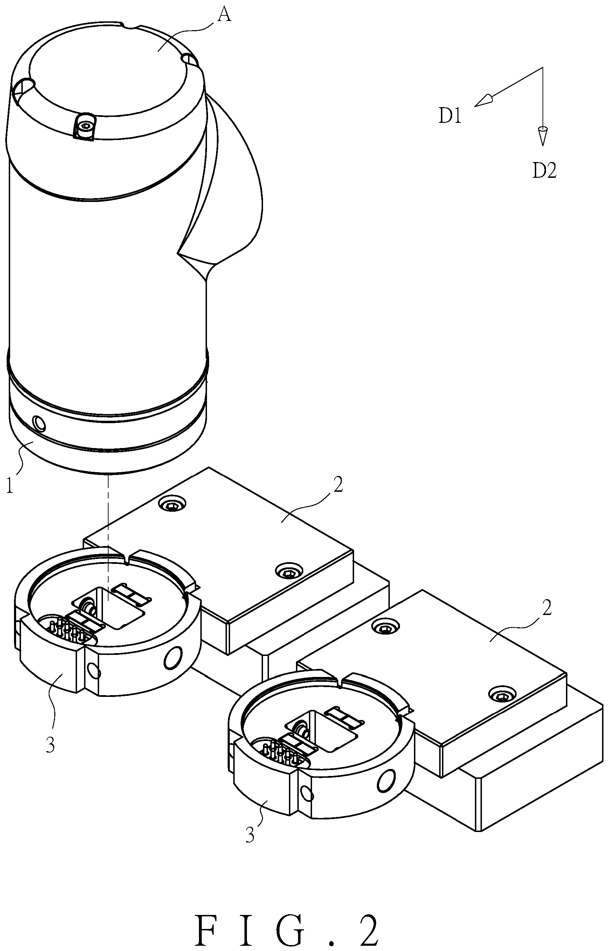

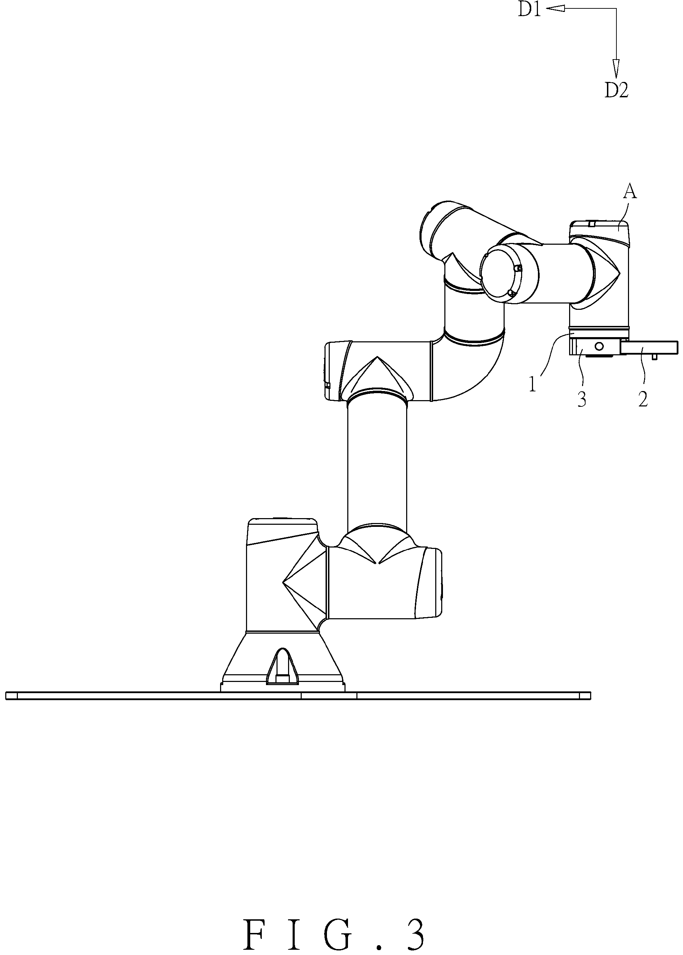

Referring to FIG. 2 and FIG. 3, the robotic arm end axle A uses the first connecting plate 1 to change tools in a tool magazine, which includes a plurality of tool changers 2. FIG. 2 shows two of the tool changers 2, with a second connecting plate 3 mounted on each of the two tool changers 2. A tool, such as a machining tool, is fixed to the second connecting plate 3 (a tool can be fixedly combined to the second connecting plate 3 using a combining method for a tool changing mechanism of the prior art, thus, a tool is not shown in the drawings). The robotic arm end axle A is operated to approach the tool changer 2 along a second direction D2, thereby enabling the first connecting plate 1 to draw near the second connecting plate 3, after which, the robotic arm end axle A is operated to drive and draw away the first connecting plate 1 and the second connecting plate 3 from the tool changer 2 along a first direction D1, the first connecting plate 1 and the second connecting plate 3 being fixed to each other and completing the tool changing operation.

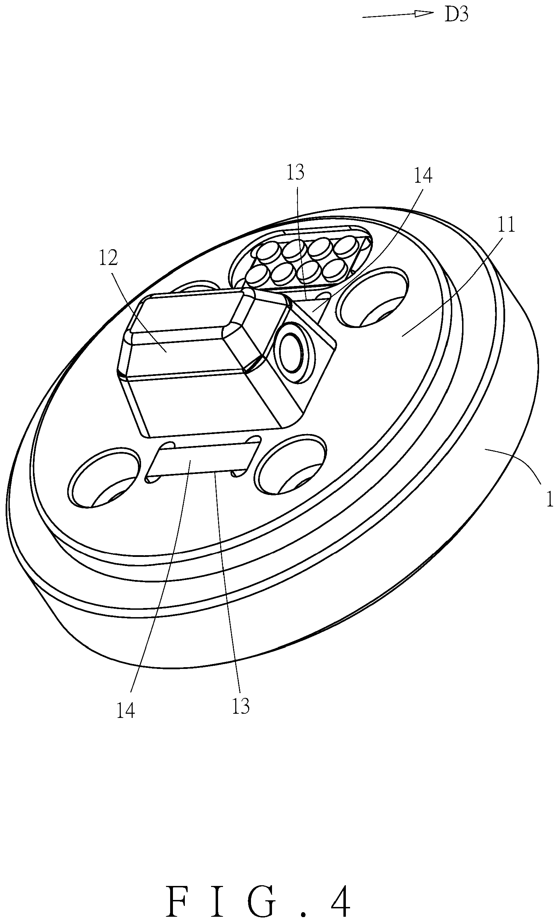

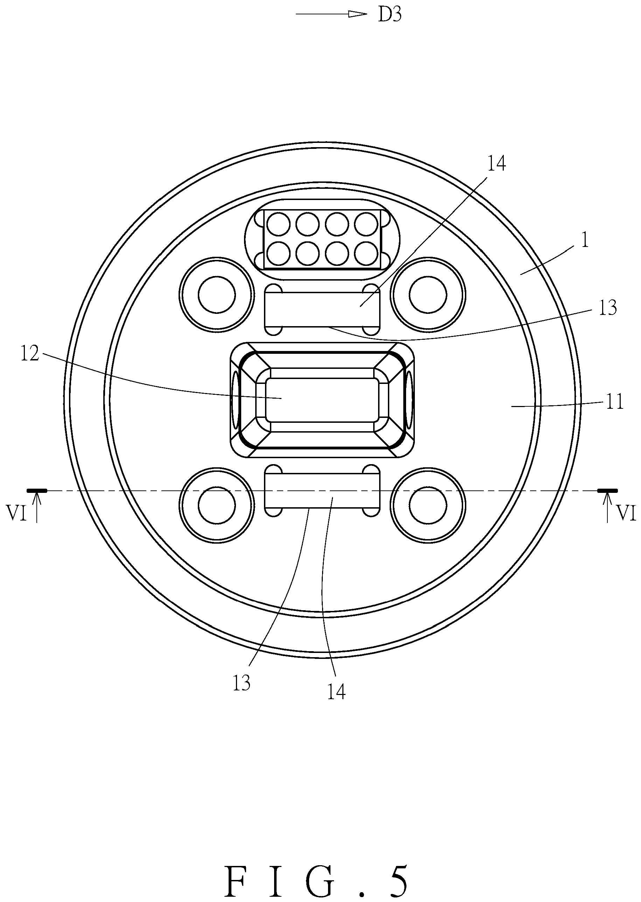

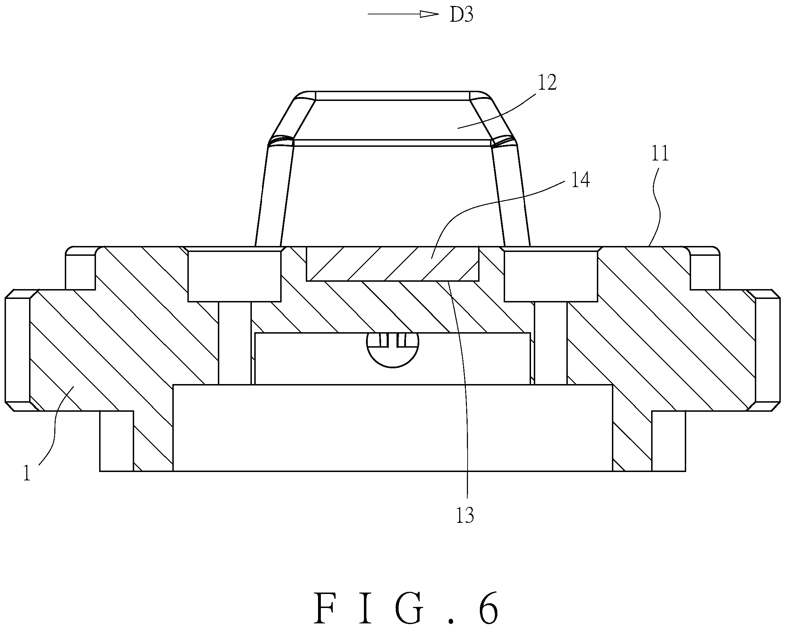

Referring to FIGs. 4 to 6, which show the first connecting plate 1 with a first contact surface 11 provided with a first guide unit. The first guide unit of the present embodiment is a protruding portion 12, which extends in a third direction D3. The first contact surface 11 is additionally provided with two first slots 13, which are respectively positioned on two opposite sides of the protruding portion 12, and first magnetizing units 14 are respectively embedded in the first slots 13 so that the first magnetizing units 14 are flush with the first contact surface 11.

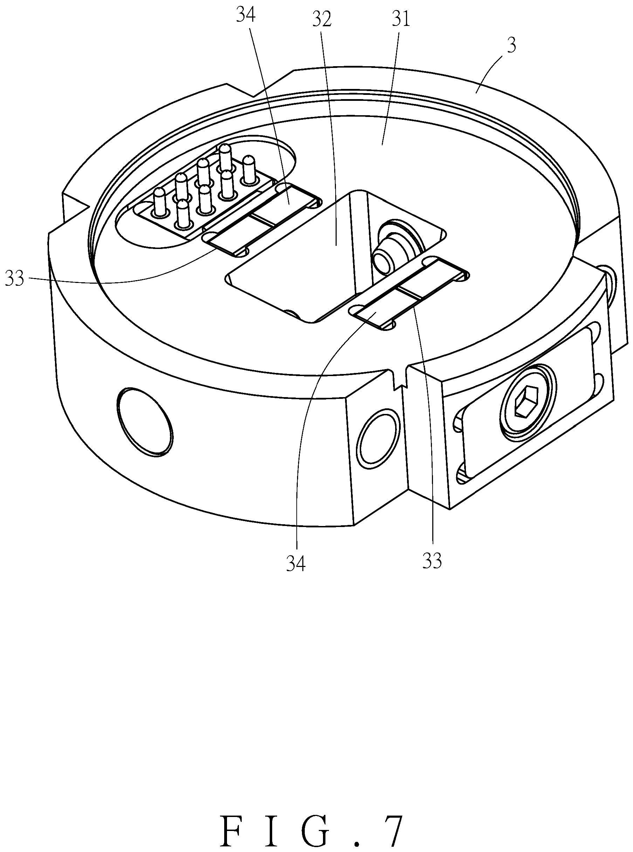

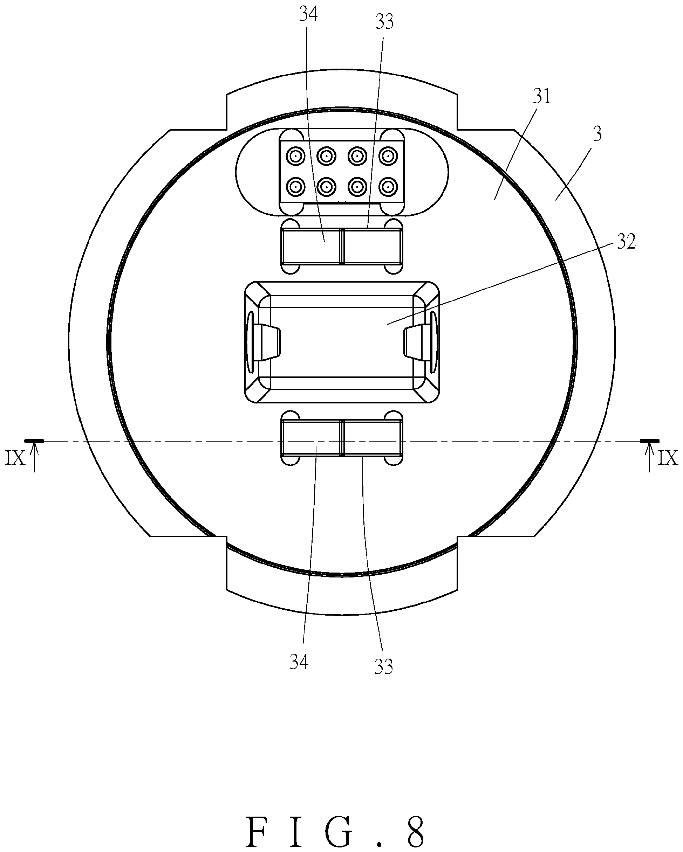

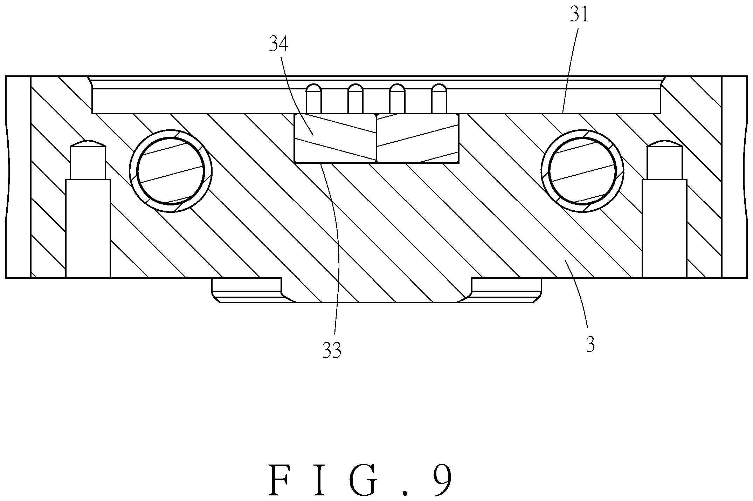

Referring to FIGs. 7 to 9, which show the second connecting plate 3 with a second contact surface 31 provided with a second guide unit. The second guide unit of the present embodiment is an indentation 32 corresponding to the above-described protruding portion 12. The second contact surface 31 is additionally provided with two second slots 33, which are respectively positioned on two opposite sides of the indentation 32, and second magnetizing units 34 are respectively embedded in the second slots 33 so that the second magnetizing units 34 are flush with the second contact surface 31.

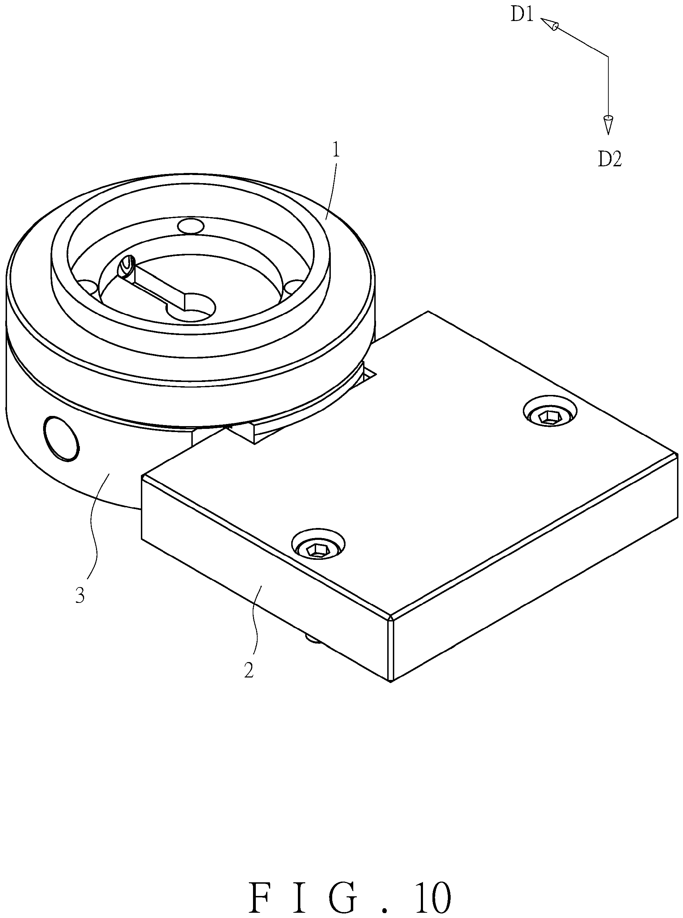

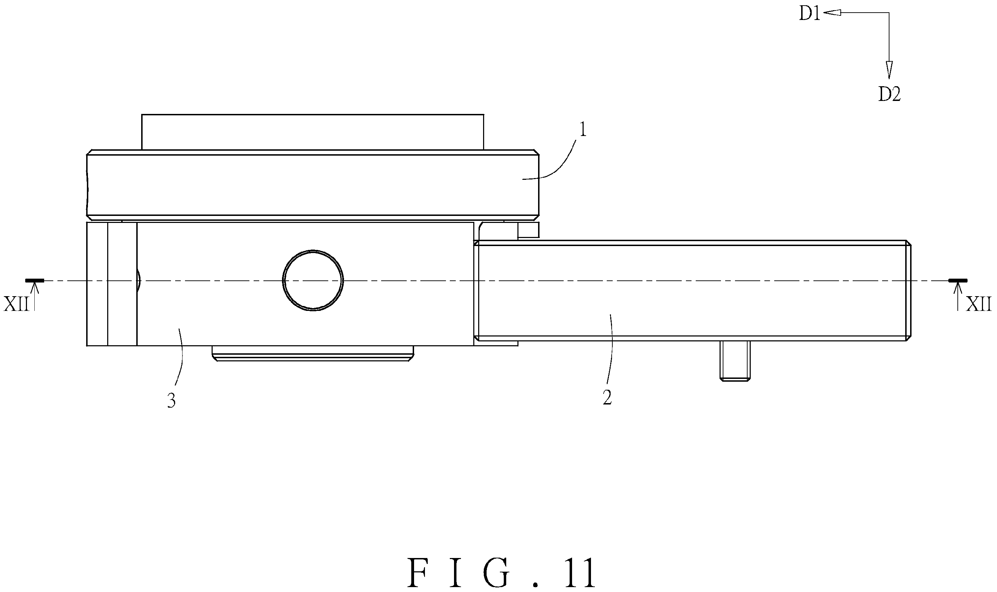

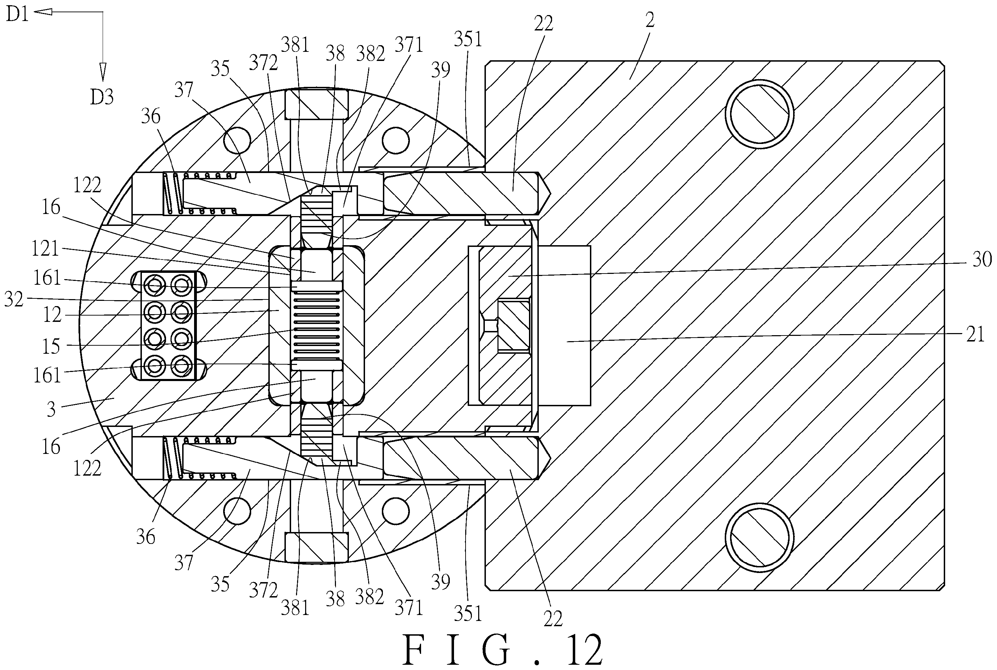

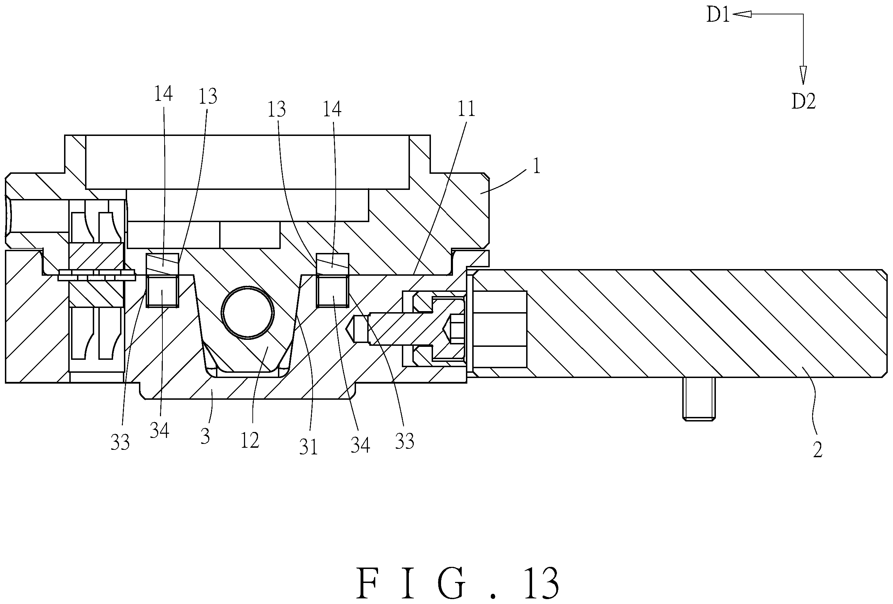

Referring to FIGs. 10 to 12, wherein the robotic arm end axle A (not drawn in the following diagrams) is driving the first connecting plate 1 to approach the second connecting plate 3, and when the robotic arm end axle A reaches a preset distance (which in the present embodiment is the height of the protruding portion 12), the coordinating function of the protruding portion 12 inserting into the indentation 32 causes the first contact surface 11 of the first connecting plate 1 to butt against the second contact surface 31 of the second connecting plate 3, thereby aligning and combining the first connecting plate 1 and the second connecting plate 3 to each other. The first magnetizing units 14 and the second magnetizing units 34 attract each other by the magnetic force therebetween that provides a magnetic binding force within the preset distance. The first connecting plate 1 and the second connecting plate 3 are combined with each other through the magnetic binding force in the second direction D2 (as shown in FIG. 13). Under the effect of the magnetic binding force, a first connecting unit of the first connecting plate 1 and a second connecting unit of the second connecting plate 3 are used to form a mechanical connection therebetween, thereby fixing the first connecting plate 1 and the second connecting plate 3 to each other. More specifically, the protruding portion 12 of the first connecting plate 1 is provided with a first guide hole 121 along the third direction D3, and the midsection inside the first guide hole 121 is provided with a first force applying member 15. The first connecting unit includes at least one first lifting pin 16 disposed in the first guide hole 121. Here, there are two first lifting pins disposed at two opposing ends of the first guide hole 121, respectively, by way of example. The first lifting pins 16 abut against the first force applying member 15, thereby providing the first lifting pins 16 with a first acting force. An end portion of each first lifting pin 16 is provided with a lifting pin flange 161, and two ends of the first guide hole 121 are respectively provided with a sleeve 122. The lifting pin flange 161 of each first lifting pin 16 abutting against the corresponding sleeve 122 is used to prevent the first lifting pin 16 from leaving the first guide hole 121. At least one indented guide locking groove 35 is provided in the second connecting plate 3. Here, there are two indented guide locking grooves 35 are disposed on two opposing sides of the second connecting plate 3 along the first direction D1, respectively, by way of example. Each of the indented guide locking grooves 35 is provided with an opening 351 and has a second force applying member 36 disposed therein. The second connecting unit includes a guide lock 37 disposed inside either guide locking groove 35, wherein each of the guide locks 37 abuts against a corresponding one of the second force applying member 36. The second connecting unit further includes a second lifting pin 38 along the third direction D3 that is able to extend to one of the two opposing sides of the indentation 32 or retract inside the second connecting plate 3. Specifically, each of the guide locks 37 is configured with a recessed portion 371 and a guide inclined surface 372, and each of the second lifting pins 38is configured with a lifting pin inclined surface 381 corresponding to the guide inclined surface 372 of the corresponding guide lock 37. Each of the second lifting pins 38 is sleeved with a spring 39, which provides a force that enables the second lifting pins 38 to retract into the second connecting plate 3. Each of the second lifting pins 38, at a distance from one end of the indentation 33, is provided with a stop piece 382, which abuts against the guide corresponding locking groove 35, thereby restricting the limiting position of each second lifting pin 38 inside the indentation 32. Each of the second force applying member 36 provides a second acting force that causes, using the coordinating function between the corresponding guide inclined surface 372 and second lifting pin inclined surface 381, the corresponding second lifting pin 38 to protrude out the indentation 32. In the present embodiment, the first force applying members 15 and the second force applying members 36 are elastic members, but is not limited by such and can adopt other means, such as magnetic members.

The above-described tool changer 2 is configured with a third force applying member 21, which provides a third acting force, and protruding posts 22 corresponding to the above-described guide locking grooves 35 respectively. When the second connecting plate 3 is mounted onto the tool changer 2, the protruding posts 22 of the tool changer 2 extend into the guide locking grooves 35 from the openings 351 of the second connecting plate 3 and push against the guide locks 37 to overcome the second acting force; the second lifting pins 38 are thereby positioned in the recessed portions 371 and retracted in the second connecting plate 3. The third force applying member 21 of the present embodiment is a magnetic member, and a corresponding magnetizing member 30 is provided on the second connecting plate 3. The third acting force is the magnetic force of the magnetic member, whereby the third acting force acting on the magnetizing member 30 causes the second connecting plate 3 to mount on the tool changer 2. During a tool changing process, before the second connecting plate 3 completely separates from the tool changer 2, the third acting force is used to continue applying a force on the second connecting plate 3, thereby preventing the second connecting plate 3 from coming away during the tool changing process. Similarly, when the second connecting plate 3 has been mounted with the tool changer 2, the third acting force continues to apply a force on the second connecting plate 3, thereby preventing the second connecting plate 3 from coming away during the tool changing process.

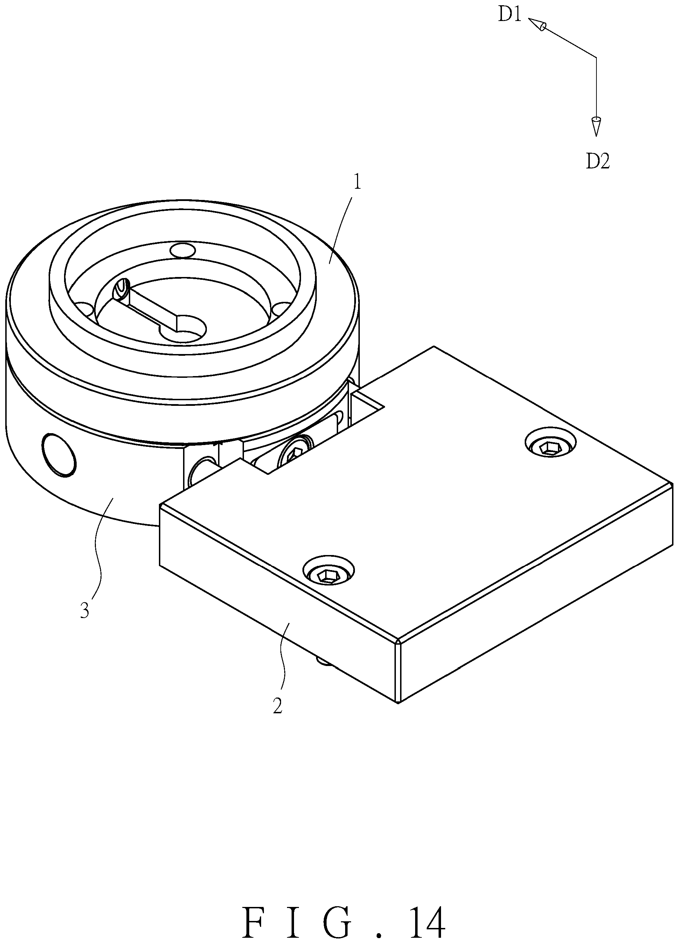

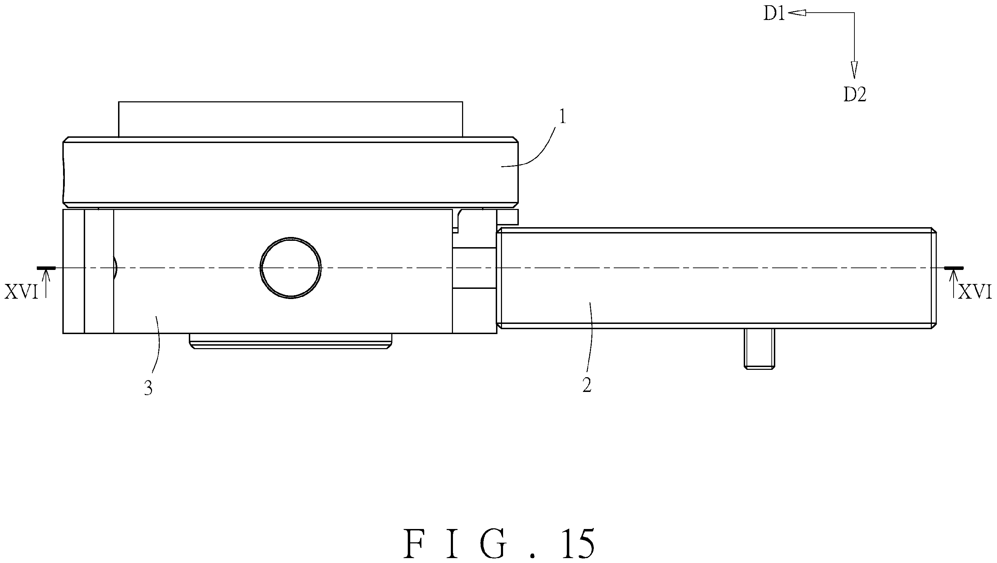

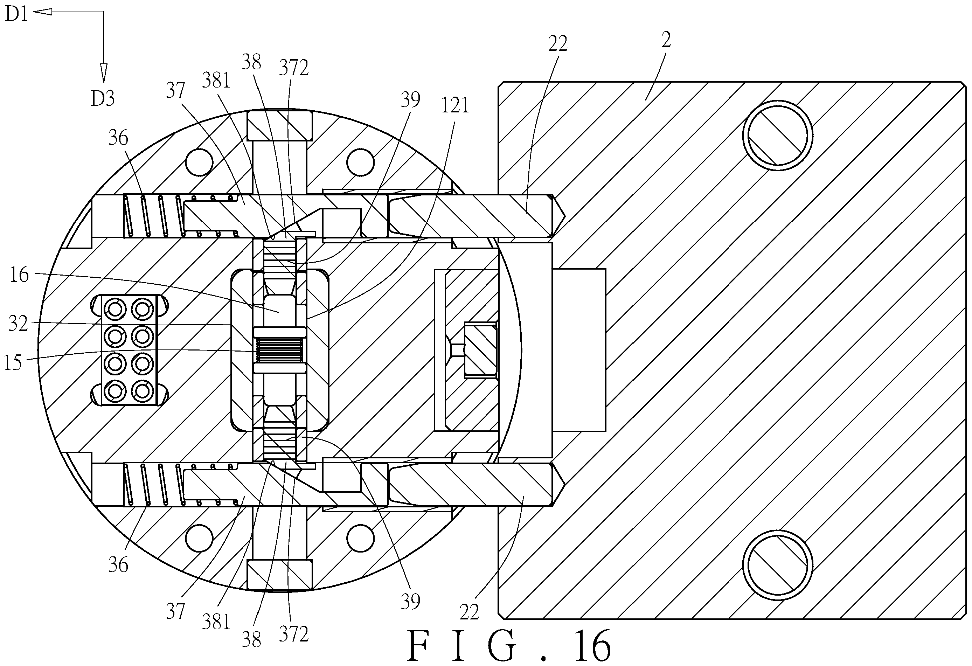

Referring to FIGs. 14 to 16, which show when the first connecting plate 1 and the second connecting plate 3 are being gradually separated from the tool changer 2 in the first direction D1 by the pulling action of the robotic arm end axle A, the second connecting plate 3 gradually separates from the protruding posts 22 of the tool changer 2, causing the second force applying members 36 to apply the second acting forces on the guide locks 37. The second acting forces are greater than the forces of the springs 39 being applied to the second lifting pins 38 and the first acting forces being applied by the first force applying member 15 on the first lifting pins 16. Hence, using the coordinating function of the guide inclined surfaces 372 of the guide locks 37 and the lifting pin inclined surfaces 381 of the second lifting pins 38, the second lifting pins 38 protrude out the indentation 32 and extend into the first guide hole 121 to form the aforementioned mechanical connection, thereby fixing the first connecting plate 1 and the second connecting plate 3 to each other.

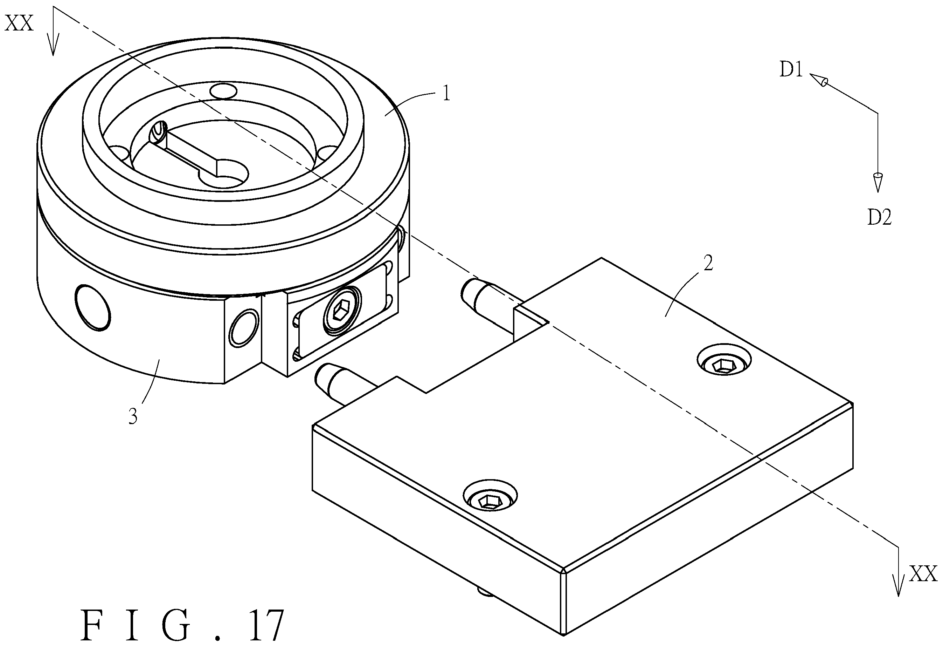

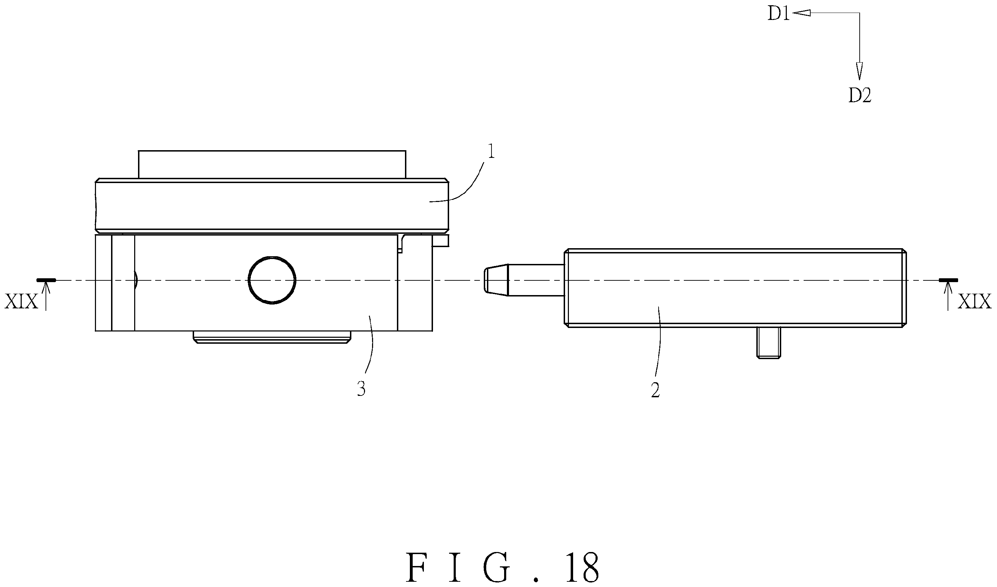

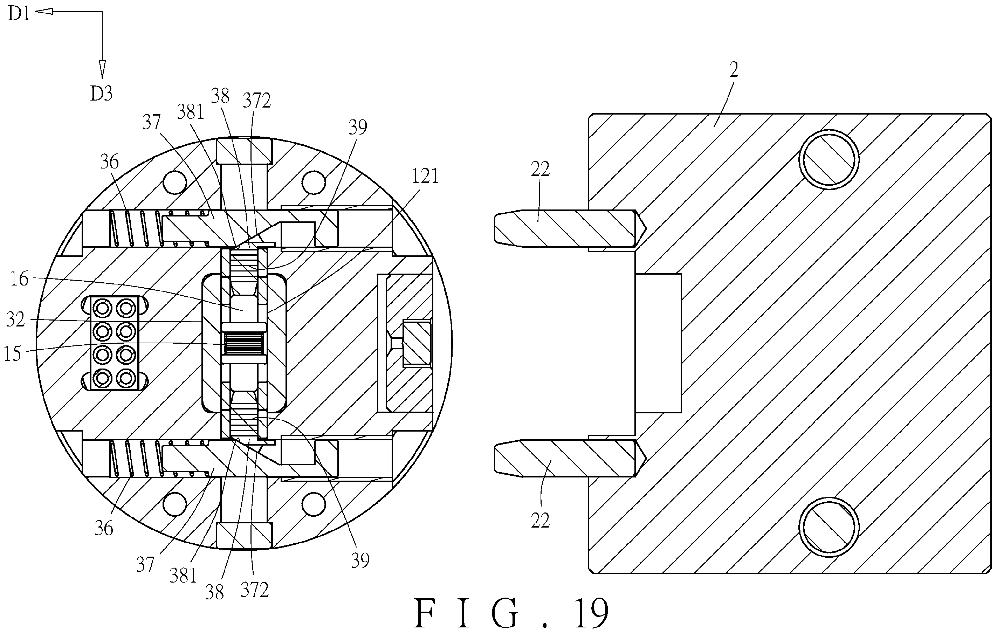

Referring to FIGs. 17 to 19, which show when the first connecting plate 1 and the second connecting plate 3 are completely separated from the tool changer 2 in the first direction D1 by the pulling action of the robotic arm end axle A, the second connecting plate 3 is completely separated from the protruding posts 22 of the tool changer 2 and can be driven by the robotic arm end axle to carry out machining.

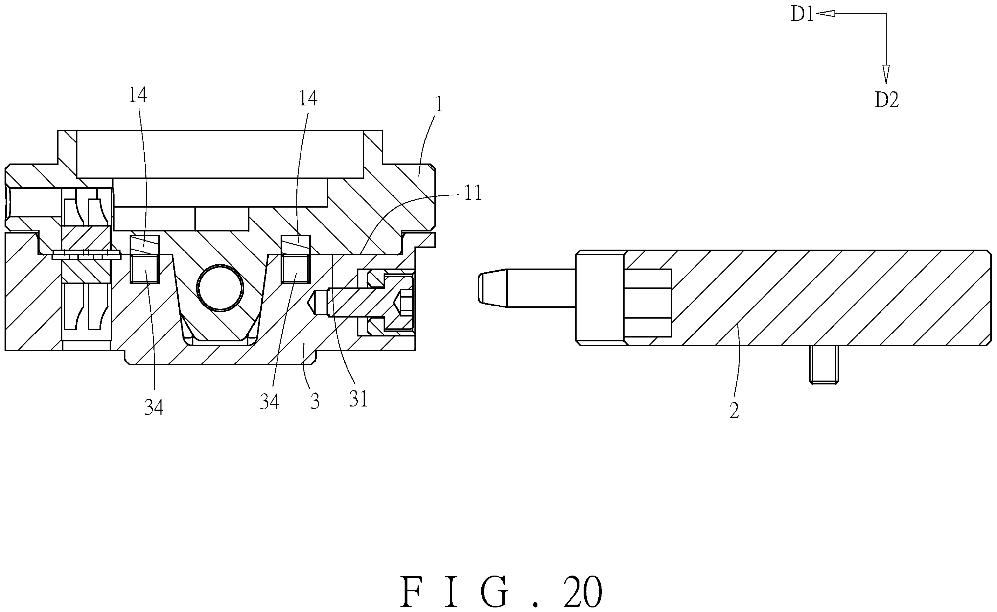

Referring to FIG. 13 and FIG. 20, when the second connecting plate 3 is not completely separated from the tool changer 2, or the first connecting plate 1 and the second connecting plate 3 are not yet completely fixed to each other, the first connecting plate 1 and the second connecting plate 3 are combined with each other through the magnetic binding force between the first magnetizing units 14 and the second magnetizing units 34; moreover, the direction of the magnetic binding force is different from the direction of the mechanical connection. Specifically, the direction of the magnetic binding force is different from the acting forces of the first force applying member 15 and the second force applying members 36, thereby enabling the separation process of the second connecting plate 3 from the tool changer 2 to be stable with no shaking, vibrating or misalignment, as well as enabling the first connecting plate 1 to maintain accurate alignment and a firm combining connection with the tool changer 2. Accordingly, the first connecting plate 1 does not need to continuously apply force to ensure alignment with the second connecting plate 3, and the magnetic configuration of the first magnetizing units 14 and the second magnetizing units 34 is set up according to the weight of the second connecting plate 3 and the tool being used. Further, according to requirements, the first magnetizing units 14 and the second magnetizing units 34 can be all magnets or one of the sets can be magnets and the other magnetizing members.

## Claims

1. A robotic arm end axle mechanical automatic tool changing mechanism, comprising:
a first connecting plate (1), which is fixed to a robotic arm end axle (A) and moves along with the robotic arm end axle (A);
a plurality of second connecting plates (3), which enable a plurality of tools to be fixed thereto respectively; and
a plurality of tool changers (2), wherein each of the second connecting plates (3) is mounted on a respective one of the tool changers (2) and configured to be selectively separated from the corresponding tool changer (2),
wherein the first connecting plate (1) includes a first guide unit, a first connecting unit and a first magnetizing unit (14), wherein the first guide unit is a protruding portion (12), which extends in a third direction and is provided with a first guide hole (121); the first connecting unit includes a first lifting pin (16) disposed inside the first guide hole (121), and the first lifting pin (16) is applied with a first acting force, that each of the second connecting plates (3) includes a second guide unit, a second connecting unit, and a second magnetizing unit (34), wherein the second guide unit is an indentation (32) corresponding to the protruding portion (12); the second connecting unit of each second connecting plate (3) includes a second lifting pin (38) disposed on the second connecting plate (3) in a movable manner along the third direction, and a guide lock (37) disposed on the second connecting plate in a movable manner along a first direction and configured to connectively drive the second lifting pin (38) to protrude out or withdraw into the indentation (32), and
that the robotic arm end axle (A) is configured to drive the first connecting plate (1) to approach a selected one of the second connecting plates (3) along a second direction, when the first connecting plate (1) is relatively close to the selected second connecting plate (3) at a preset distance, the first guide unit and the second guide unit which are the protruding portion (12) and the indentation (32), respectively, matches up with each other and jointly guide the first connecting plate (1) and the second connecting plate (3) to accurately align with each other so that a magnetic force between the first magnetizing unit (14) and the second magnetizing unit (34) within the preset distance along the second direction provides a magnetic binding force that is used to draw and combine the first connecting plate (1) and the selected second connecting plates (3) to each other; under the effect of the magnetic binding force, the first connecting plate (1) and the selected second connecting plate (3) are fixed to each other by a mechanical connection between the first connecting unit and the second connecting unit of the selected second connecting plate (3), wherein when the robotic arm end axle (A) draws the first connecting plate (1) and the selected second connecting plate (3) to move away from the corresponding tool changer (2) along the first direction, there is an included angle between the first direction and the second direction, and the guide lock (37) applies a second acting force to overcome the first acting force and drives the second lifting pin (38) to push and move the first lifting pin (16), thereby causing the second lifting pin (38) to extend into the first guide hole (121) to form the mechanical connection, and fixing the first connecting plate (1) and the selected second connecting plate (3) to each other.

2. The robotic arm end axle mechanical automatic tool changing mechanism according to claim 1, wherein both the first magnetizing unit (14) and the second magnetizing unit (34) are magnets, or one of them is a magnet and the other is a magnetizing member.

3. The robotic arm end axle mechanical automatic tool changing mechanism according to claim 1 or 2, wherein each of the tool changers (2) includes a third force applying member (21) and at least one protruding post (22); when the robotic arm end axle (A) drives the first connecting plate (1) and the selected second connecting plate (3) to move towards the corresponding tool changer (2) along the first direction, whereupon the protruding post (22) pushes against the guide lock (37) to overcome the second acting force, the first lifting pin (16) pushes and moves the second lifting pin (38) by the first acting force, causing the second lifting pin (38) to withdraw into the indentation (32) and release the mechanical connection, and the third force applying member (21) applies a third acting force on the selected second connecting plate (3), causing the selected second connecting plate (3) to mount on the corresponding tool changer (2), and then the first connecting plate (1) moves away from the selected second connecting plate (3) along the second direction.

4. The robotic arm end axle mechanical automatic tool changing mechanism according to claim 3, wherein any of the first acting force, the second acting force, and the third acting force is elastic force or magnetic force.

5. The robotic arm end axle mechanical automatic tool changing mechanism according to claim 3, wherein each of the second connecting plate (3) is provided with at least one guide locking groove (35) to receive the guide lock (37) and a second force applying member (36), the guide lock (37) is configured with a recessed portion (371) and a guide inclined surface (372), and the second lifting pin (38) is provided with a second lifting pin inclined surface (381) corresponding to the guide inclined surface (372); when the selected second connecting plate (3) moves away from the corresponding tool changer (2), the second force applying member (36) applies the second acting force to drive the guide lock (37), and the coordinating function of the guide inclined surface (372) and the second lifting pin inclined surface (381) causes the second lifting pin (38) to protrude out of the indentation (32), overcoming the first acting force and extending into the first guide hole (121); when the selected second connecting plate (3) moves toward the tool changer (2), the protruding post (22) penetrates the guide locking groove (35), whereupon the protruding post (22) pushes and moves the guide lock (37) to overcome the second acting force, and the first lifting pin (16) pushes and moves the second lifting pin (38) by the first acting force toward the recessed portion (371), thereby causing the second lifting pin (38) to separate from the first guide hole (121) and withdraw into the indentation (32).

6. The robotic arm end axle mechanical automatic tool changing mechanism according to any one of claims 1 to 5, wherein a first force applying member (15) is disposed inside the first guide hole (121), and the first force applying member (15) applies the first acting force on the first lifting pin (16).

7. The robotic arm end axle mechanical automatic tool changing mechanism according to any one of claims 1 to 6, wherein the first connecting plate (1) includes a first contact surface (11), the top of which is provided with a first slot (13), the first magnetizing unit (14) is embedded in the first slot (13) so that the first magnetizing unit (14) is flush with the first contact surface (11); each of the second connecting plates (3) includes a second contact surface (31), wherein the top of which is provided with a second slot (33), and the second magnetizing unit (34) is embedded in the second slot (33) so that the second magnetizing unit (34) is flush with the second contact surface (11).

8. The robotic arm end axle mechanical automatic tool changing mechanism according to any one of claims 1 to 7, wherein the direction of the magnetic binding force is different from the direction of the mechanical connection.

## Patentansprüche

1. Mechanischer automatischer Roboterarmendachsenwerkzeugwechselmechanismus, welcher umfasst:
eine erste Verbindungsplatte (1), welche an einer Roboterarmendachse (A) befestigt ist und sich mit der Roboterarmendachse (A) zusammen bewegt;
eine Vielzahl von zweiten Verbindungsplatten (3), welche ermöglicht, dass eine Vielzahl von Werkzeugen jeweils daran befestigt wird; und
eine Vielzahl von Werkzeugwechslern (2), wobei jede der zweiten Verbindungsplatten (3) an einem entsprechenden der Werkzeugwechsler (2) montiert ist und zur selektiven Trennung von dem korrespondierenden Werkzeugwechsler (2) konfiguriert ist,
wobei
die erste Verbindungsplatte (1) eine erste Führungseinheit, eine erste Verbindungseinheit und eine erste Magnetisierungseinheit (14) beinhaltet, wobei die erste Führungseinheit ein hervorstehender Abschnitt (12) ist, der sich in einer dritten Richtung erstreckt und mit einem ersten Führungsloch (121) versehen ist; wobei die erste Verbindungseinheit einen ersten Hubstift (16) beinhaltet, der innerhalb des ersten Führungslochs (121) angeordnet ist, und der erste Hubstift (16) mit einer ersten Wirkkraft appliziert wird,
jede der zweiten Verbindungsplatten (3) eine zweite Führungseinheit, eine zweite Verbindungseinheit und eine zweite Magnetisierungseinheit (34) beinhaltet, wobei die zweite Führungseinheit eine Einkerbung (32) ist, die mit dem hervorstehenden Abschnitt (12) korrespondiert; die zweite Verbindungseinheit von jeder zweiten Verbindungsplatte (3) beinhaltet einen zweiten Hubstift (38), der an der zweiten Verbindungsplatte (3) in einer entlang der dritten Richtung beweglichen Weise angeordnet ist, und eine Führungsverriegelung (37), die an der zweiten Verbindungsplatte in einer entlang einer ersten Richtung beweglichen Weise angeordnet ist und konfiguriert ist, um den zweiten Hubstift (38) verbindend so anzutreiben, dass er aus der Einkerbung (32) hervorragt oder in diese zurückgezogen ist, und
die Roboterarmendachse (A) konfiguriert ist, um die erste Verbindungsplatte (1) so anzutreiben, dass sie sich einer ausgewählten der zweiten Verbindungsplatten (3) entlang einer zweiten Richtung nähert, wobei, wenn die erste Verbindungsplatte (1) relativ nahe an der ausgewählten zweiten Verbindungsplatte (3) in einem voreingestellten Abstand ist, die erste Führungseinheit und die zweite Führungseinheit, welche jeweils der hervorstehende Abschnitt (12) und die Einkerbung (32) sind, miteinander zusammenpassen und gemeinsam die erste Verbindungsplatte (1) und die zweite Verbindungsplatte (3) führen, um sie genau aufeinander auszurichten, so dass eine magnetische Kraft zwischen der ersten Magnetisierungseinheit (14) und der zweiten Magnetisierungseinheit (34) innerhalb des voreingestellten Abstands entlang der zweiten Richtung eine magnetische Bindungskraft bereitstellt, die verwendet wird, um die erste Verbindungsplatte (1) und die ausgewählte der zweiten Verbindungsplatten (3) zueinander zuziehen und miteinander zu kombinieren; wobei unter der Wirkung der magnetischen Bindungskraft die erste Verbindungsplatte (1) und die ausgewählte zweite Verbindungsplatte (3) durch eine mechanische Verbindung zwischen der ersten Verbindungseinheit und der zweiten Verbindungseinheit der ausgewählten zweiten Verbindungsplatte (3) aneinander fixiert sind, wobei, wenn die Roboterarmendachse (A) die erste Verbindungsplatte (1) und die ausgewählte zweite Verbindungsplatte (3) zieht, um sie von dem korrespondierenden Werkzeugwechsler (2) entlang der ersten Richtung wegzubewegen, ein eingeschlossener Winkel zwischen der ersten Richtung und der zweiten Richtung besteht und die Führungsverriegelung (37) eine zweite Wirkkraft ausübt, um die erste Wirkkraft zu überwinden, und den zweiten Hubstift (38) zum Drücken und Bewegen des ersten Hubstifts (16) antreibt, wodurch bewirkt wird, dass sich der zweite Hubstift (38) in das erste Führungsloch (121) erstreckt, um die mechanische Verbindung zu bilden, und die erste Verbindungsplatte (1) und die ausgewählte zweite Verbindungsplatte (3) aneinander zu fixieren.

2. Mechanischer automatischer Roboterarmendachsenwerkzeugwechselmechanismus nach Anspruch 1, bei welchem sowohl die erste Magnetisierungseinheit (14) als auch die zweite Magnetisierungseinheit (34) Magnete sind oder eine davon ein Magnet und die andere ein Magnetisierungselement ist.

3. Mechanischer automatischer Roboterarmendachsenwerkzeugwechselmechanismus nach Anspruch 1 oder 2, bei welchem jeder der Werkzeugwechsler (2) ein drittes Kraftausübungselement (21) und mindestens einen vorstehenden Pfosten (22) beinhaltet; wobei, wenn die Roboterarmendachse (A) die erste Verbindungsplatte (1) und die ausgewählte zweite Verbindungsplatte (3) zum Bewegen in Richtung des korrespondierenden Werkzeugwechslers (2) entlang der ersten Richtung antreibt, woraufhin der vorstehende Pfosten (22) gegen die Führungsverriegelung (37) drückt, um die zweite Wirkkraft zu überwinden, der erste Hubstift (16) den zweiten Hubstift (38) durch die erste Wirkkraft drückt und bewegt, wodurch der zweite Hubstift (38) in die Einkerbung (32) zurückgezogen wird und die mechanische Verbindung gelöst wird, und das dritte Kraftausübungselement (21) eine dritte Wirkkraft auf die ausgewählte zweite Verbindungsplatte (3) ausübt, wodurch die ausgewählte zweite Verbindungsplatte (3) an dem korrespondierenden Werkzeugwechsler (2) montiert wird und sich dann die erste Verbindungsplatte (1) entlang der zweiten Richtung von der ausgewählten zweiten Verbindungsplatte (3) wegbewegt.

4. Mechanischer automatischer Roboterarmendachsenwerkzeugwechselmechanismus nach Anspruch 3, bei welchem jede der ersten Wirkkraft, der zweiten Wirckraft und der dritten Wirkkraft eine elastische Kraft oder magnetische Kraft ist.

5. Mechanischer automatischer Roboterarmendachsenwerkzeugwechselmechanismus nach Anspruch 3, bei welchem jede zweite Verbindungsplatte (3) mit mindestens einer Führungsverriegelungsnut (35) zur Aufnahme der Führungsverriegelung (37) und einem zweiten Kraftausübungselement (36) versehen ist, wobei die Führungsverriegelung (37) mit einem vertieften Abschnitt (371) und einer Führungsschrägfläche (372) konfiguriert ist, und der zweite Hubstift (38) ist mit einer zweiten Hubstiftschrägfläche (381) versehen, die mit der Führungsschrägfläche (372) korrespondiert; wenn sich die ausgewählte zweite Verbindungsplatte (3) von dem korrespondierenden Werkzeugwechsler (2) wegbewegt, übt das zweite Kraftausübungselement (36) die zweite Wirkkraft aus, um die Führungsverriegelung (37) anzutreiben und die koordinierende Funktion der Führungsschrägfläche (372) und der zweiten Hubstiftschrägfläche (381) bewirkt, dass der zweite Hubstift (38) aus der Einkerbung (32) hervorsteht, dabei die erste Wirckraft überwindet und sich in das erste Führungsloch (121) erstreckt; wobei, wenn die ausgewählte zweite Verbindungsplatte (3) sich in Richtung des Werkzeugwechslers (2) bewegt, der vorstehende Pfosten (22) in die Führungsverriegelungsnut (35) eindringt, woraufhin der vorstehende Pfosten (22) die Führungsverriegelung (37) drückt und bewegt, um die zweite Wirkkraft zu überwinden, und der erste Hubstift (16) den zweiten Hubstift (38) durch die erste Wirkkraft in Richtung des vertieften Abschnitts (371) drückt und bewegt, wodurch bewirkt wird, dass sich der zweite Hubstift (38) von dem ersten Führungsloch (121) trennt und in die Einkerbung (32) zurückgezogen wird.

6. Mechanischer automatischer Roboterarmendachsenwerkzeugwechselmechanismus nach einem der Ansprüche 1 bis 5, bei welchem ein erstes Kraftausübungselement (15) innerhalb des ersten Führungslochs (121) angeordnet ist und das erste Kraftausübungselement (15) die erste Wirkkraft auf den ersten Hubstift (16) ausübt

7. Mechanischer automatischer Roboterarmendachsenwerkzeugwechselmechanismus nach einem der Ansprüche 1 bis 6, bei welchem die erste Verbindungsplatte (1) eine erste Kontaktfläche (11) beinhaltet, deren Oberseite mit einem ersten Schlitz (13) versehen ist, wobei die erste Magnetisierungseinheit (14) in dem ersten Schlitz (13) eingebettet ist, sodass die erste Magnetisierungseinheit (14) mit der ersten Kontaktfläche (11) bündig ist; wobei jede der zweiten Verbindungsplatten (3) eine zweite Kontaktfläche (31) beinhaltet, deren Oberseite mit einem zweiten Schlitz (33) versehen ist und die zweite Magnetisierungseinheit (34) in dem zweiten Schlitz (33) eingebettet ist, sodass die zweite Magnetisierungseinheit (34) mit der zweiten Kontaktfläche (11) bündig ist.

8. Mechanischer automatischer Roboterarmendachsenwerkzeugwechselmechanismus nach einem der Ansprüche 1 bis 7, bei welchem die Richtung der magnetischen Bindungskraft von der Richtung der mechanischen Verbindung verschieden ist.

## Revendications

1. Mécanisme de changement d'outil mécanique automatique d'axe d'extrémité de bras robotisé, comprenant :
une première plaque de liaison (1), qui est fixée à un axe d'extrémité de bras robotisé (A) et se déplace le long de l'axe d'extrémité de bras robotisé (A) ;
une pluralité de secondes plaques de liaison (3), qui permettent de fixer respectivement une pluralité d'outils ; et
une pluralité de changeurs d'outils (2), dans lequel chacune des secondes plaques de liaison (3) est montée sur un respectif des changeurs d'outils (2) et configurée pour être sélectivement séparée du changeur d'outils correspondant (2),
dans lequel la première plaque de liaison (1) inclut une première unité de guidage, une première unité de liaison et une première unité de magnétisation (14), dans lequel la première unité de guidage est une partie saillante (12), qui s'étend dans une troisième direction et est munie d'un premier trou de guidage (121) ; la première unité de liaison inclut une première goupille de levage (16) disposée à l'intérieur du premier trou de guidage (121), et la première goupille de levage (16) est appliquée avec une première force d'action, en ce que chacune des secondes plaques de liaison (3) inclut une seconde unité de guidage, une seconde unité de liaison, et une seconde unité de magnétisation (34), dans lequel la seconde unité de guidage est une indentation (32) correspondant à la partie saillante (12) ; la seconde unité de liaison de chaque seconde plaque de liaison (3) inclut une seconde goupille de levage (38) disposée sur la seconde plaque de liaison (3) de manière mobile le long de la troisième direction, et un verrou de guidage (37) disposé sur la seconde plaque de liaison de manière mobile le long d'une première direction et configuré pour entraîner de manière connective la seconde goupille de levage (38) à faire saillie hors de l'indentation (32) ou à se retirer dans cette dernière, et
en ce que l'axe d'extrémité de bras robotisé (A) est configuré pour entraîner la première plaque de liaison (1) à s'approcher d'une seconde plaque de liaison sélectionnée des secondes plaques de liaison (3) le long d'une deuxième direction, lorsque la première plaque de liaison (1) est relativement proche de la seconde plaque de liaison sélectionnée (3) à une distance prédéfinie, la première unité de guidage et la seconde unité de guidage, qui sont la partie saillante (12) et l'indentation (32), respectivement, s'alignent l'une sur l'autre et guident conjointement la première plaque de liaison (1) et la seconde plaque de liaison (3) pour qu'elles s'alignent précisément l'une sur l'autre, de sorte qu'une force magnétique entre la première unité de magnétisation (14) et la seconde unité de magnétisation (34) à l'intérieur de la distance prédéfinie le long de la deuxième direction fournisse une force de liaison magnétique qui est utilisée pour attirer et combiner la première plaque de liaison (1) et les secondes plaques de liaison sélectionnées (3) les unes avec les autres ; sous l'effet de la force de liaison magnétique, la première plaque de liaison (1) et la seconde plaque de liaison sélectionnée (3) sont fixées l'une à l'autre par une liaison mécanique entre la première unité de liaison et la seconde unité de liaison de la seconde plaque de liaison sélectionnée (3), dans lequel, lorsque l'axe d'extrémité de bras robotisé (A) entraîne la première plaque de liaison (1) et la seconde plaque de liaison sélectionnée (3) à s'éloigner du changeur d'outils correspondant (2) le long de la première direction, il existe un angle inclus entre la première direction et la deuxième direction, et le verrou de guidage (37) applique une deuxième force d'action pour surmonter la première force d'action et entraîne la seconde goupille de levage (38) à pousser et déplacer la première goupille de levage (16), amenant ainsi la seconde goupille de levage (38) à s'étendre dans le premier trou de guidage (121) pour former la liaison mécanique, et fixant la première plaque de liaison (1) et la seconde plaque de liaison sélectionnée (3) l'une à l'autre.

2. Mécanisme de changement d'outil mécanique automatique d'axe d'extrémité de bras robotisé selon la revendication 1, dans lequel la première unité de magnétisation (14) et la seconde unité de magnétisation (34) sont toutes deux des aimants, ou l'une d'entre elles est un aimant et l'autre est un élément de magnétisation.

3. Mécanisme de changement d'outil mécanique automatique d'axe d'extrémité de bras robotisé selon la revendication 1 ou 2, dans lequel chacun des changeurs d'outil (2) inclut un troisième élément d'application de force (21) et au moins un poteau saillant (22) ; lorsque l'axe d'extrémité de bras robotisé (A) entraîne la première plaque de liaison (1) et la seconde plaque de liaison sélectionnée (3) à se déplacer vers le changeur d'outils correspondant (2) le long de la première direction, après quoi le montant saillant (22) pousse contre le verrou de guidage (37) pour surmonter la deuxième force d'action, la première goupille de levage (16) pousse et déplace la seconde goupille de levage (38) par la première force d'action, entraînant le retrait de la seconde goupille de levage (38) dans l'indentation (32) et la libération de la liaison mécanique, et le troisième élément d'application de force (21) applique une troisième force d'action sur la seconde plaque de liaison sélectionnée (3), entraînant le montage de la seconde plaque de liaison sélectionnée (3) sur le changeur d'outils correspondant (2), puis la première plaque de liaison (1) s'éloigne de la seconde plaque de liaison sélectionnée (3) le long de la deuxième direction.

4. Mécanisme de changement d'outil mécanique automatique d'axe d'extrémité de bras robotisé selon la revendication 3, dans lequel l'une quelconque de la première force d'action, de la deuxième force d'action et de la troisième force d'action est une force élastique ou une force magnétique.

5. Mécanisme de changement d'outil mécanique automatique d'axe d'extrémité de bras robotisé selon la revendication 3, dans lequel chacune de la seconde plaque de liaison (3) est munie d'au moins une rainure de verrouillage de guide (35) pour recevoir le verrou de guidage (37) et un deuxième élément d'application de force (36), le verrou de guidage (37) est configuré avec une partie en retrait (371) et une surface inclinée de guidage (372), et la seconde goupille de levage (38) est munie d'une seconde surface inclinée de goupille de levage (381) correspondant à la surface inclinée de guidage (372) ; lorsque la seconde plaque de liaison sélectionnée (3) s'éloigne du changeur d'outils correspondant (2), le deuxième élément d'application de force (36) applique la deuxième force d'action pour entraîner le verrou de guidage (37), et la fonction de coordination de la surface inclinée de guidage (372) et de la seconde surface inclinée de goupille de levage (381) amène la seconde goupille de levage (38) à faire saillie hors de l'indentation (32), surmontant la première force d'action et s'étendant dans le premier trou de guidage (121) ; lorsque la seconde plaque de liaison sélectionnée (3) se déplace vers le changeur d'outils (2), le poteau saillant (22) pénètre dans la rainure de verrouillage de guide (35), après quoi le poteau saillant (22) pousse et déplace le verrou de guidage (37) pour surmonter la deuxième force d'action, et la première goupille de levage (16) pousse et déplace la seconde goupille de levage (38) par la première force d'action vers la partie en retrait (371), amenant ainsi la seconde goupille de levage (38) à se séparer du premier trou de guidage (121) et à se retirer dans l'indentation (32).

6. Mécanisme de changement d'outil mécanique automatique d'axe d'extrémité de bras robotisé selon l'une quelconque des revendications 1 à 5, dans lequel un premier élément d'application de force (15) est disposé à l'intérieur du premier trou de guidage (121), et le premier élément d'application de force (15) applique la première force d'action sur la première goupille de levage (16).

7. Mécanisme de changement d'outil mécanique automatique d'axe d'extrémité de bras robotisé selon l'une quelconque des revendications 1 à 6, dans lequel la première plaque de liaison (1) inclut une première surface de contact (11), dont le sommet est muni d'une première fente (13), la première unité de magnétisation (14) est encastrée dans la première fente (13) de sorte que la première unité de magnétisation (14) affleure la première surface de contact (11) ; chacune des secondes plaques de liaison (3) inclut une seconde surface de contact (31), dans lequel dont le sommet est muni d'une seconde fente (33), et la seconde unité de magnétisation (34) est encastrée dans la seconde fente (33) de sorte que la seconde unité de magnétisation (34) affleure la seconde surface de contact (11).

8. Mécanisme de changement d'outil mécanique automatique d'axe d'extrémité de bras robotisé selon l'une quelconque des revendications 1 à 7, dans lequel la direction de la force de liaison magnétique est différente de la direction de la liaison mécanique.
